# EUROPEAN PATENT SPECIFICATION

(11) **EP 3 379 617 B1**
(45) Date of publication and mention of the grant of the patent: **10.11.2021**
(21) Application number: 18163167.2
(22) Date of filing: 21.03.2018
(51) Int. Cl.: H01M 4/1393, H01M 10/04, H01M 10/0525, H01M 10/0567, H01M 10/058, H01M 4/04, H01M 4/13, H01M 4/139, H01M 10/44, H01M 4/133, H01M 4/587

(54) **LITHIUM SECONDARY BATTERY**
LITHIUMSEKUNDÄRBATTERIE
BATTERIE SECONDAIRE AU LITHIUM

(30) Priority: 22.03.2017 KR 20170036189
(43) Date of publication of application: 26.09.2018
(73) Proprietor: Samsung SDI Co., Ltd., Yongin-si, Gyeonggi-do 17084 (KR)
(72) Inventor: You, Hogon, 17084 Gyeonggi-do (KR); Jung, Inho, 17084 Gyeonggi-do (KR)
(74) Representative: Taor, Simon Edward William

(56) References cited:
- JP-A- 2002 329 529
- JP-A- 2005 071 697
- US-A1- 2012 208 087

## Description

### BACKGROUND

### 1. Field

One or more embodiments relate to lithium secondary batteries including a passivation layer formed on a surface of a negative electrode.

### 2. Description of the Related Art

A lithium secondary battery generally includes a positive electrode, a negative electrode, and an electrolyte. When the electrolyte is brought into contact with active materials of the electrodes, oxidation and reduction reactions of components of the electrolyte occur. Although some products of these reactions are desorbed or eluted therefrom, others are deposited on the surface of the electrode to form a passivation layer on the surface of an active material.

Since the behavior of the passivation layer is similar to that of a solid electrolyte, due to a very low electronic conductivity and a very high lithium ion conductivity, the passivation layer is also referred to as a solid electrolyte interphase (SEI) layer.

US20120208087 discloses a lithium secondary battery including: a positive electrode having a positive-electrode active material capable of occluding and releasing lithium ions; a negative electrode having a negative-electrode active material capable of occluding and releasing lithium ions; a separator interposed between the positive electrode and the negative electrode; and an electrolyte having lithium-ion conductivity. The positive-electrode active material contains a nickel-type lithium-containing complex oxide.

JP2002329529 discloses a secondary battery having a thickness not greater than 0.3 mm armoring material, a positive electrode and a negative electrode having a carbonaceous substance capable of storing and releasing lithium ions.

JP2005071697 discloses a method for initially charging nonaqueous electrolyte secondary battery.

### SUMMARY

One or more embodiments include a lithium secondary battery having a high initial efficiency and a high capacity during charging and discharging.

One or more embodiments include a lithium secondary battery having a high capacity and a long lifespan by suppressing a thickness increase of the battery during charging and discharging. According to an aspect of the invention, there is provided a lithium secondary battery as set out in claim 1. Preferred features of this aspect are set out in claims 2 to 9.

According to an aspect of the invention, there is provided a method of manufacturing a lithium secondary battery as set out in claim 10.

### BRIEF DESCRIPTION OF THE DRAWINGS

These and/or other aspects will become apparent and more readily appreciated from the following description of the embodiments, taken in conjunction with the accompanying drawings in which:

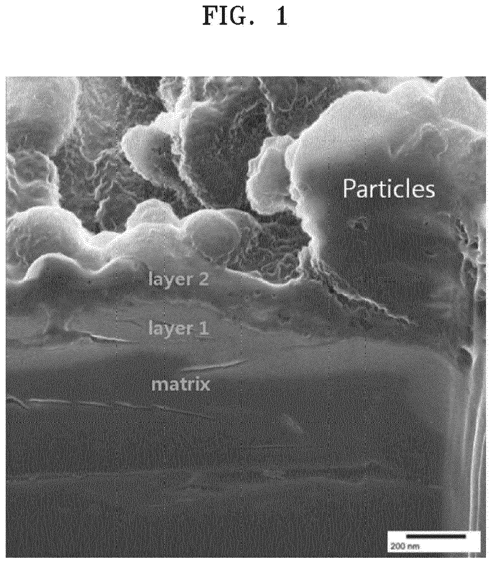

FIG. 1 is a scanning electron microscope (SEM) image of a passivation layer of a lithium secondary battery according to an embodiment;
FIGS. 2A to 2D are SEM images of a passivation layer of a lithium secondary battery according to an embodiment;
FIGS. 3A to 3C are SEM images of a passivation layer of a conventional lithium secondary battery;
FIGS. 4A and 4B are graphs illustrating analysis results of surface compositions and thicknesses of a film-like passivation layer of a lithium secondary battery according to an embodiment after one cycle of charging and discharging and 300 cycles of charging and discharging analyzed by field emission Auger electron spectroscopy (FE-AES) respectively;
FIGS. 5A and 5B are graphs illustrating FE-AES analysis results of surface compositions and thicknesses of a film-like passivation layer of a conventional
   lithium secondary battery after one cycle of charging and discharging and 300 cycles of charging and discharging respectively;
FIG. 6 is a graph illustrating thickness increase rates of a lithium secondary battery according to an embodiment and a conventional lithium secondary battery with respect to the number of cycles;
FIG. 7 is a graph illustrating capacity variations of a lithium secondary battery according to an embodiment and a conventional lithium secondary battery with respect to the number of cycles; and
FIG. 8 is a diagram schematically illustrating a structure of a lithium secondary battery according to an embodiment.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of" when preceding a list of elements, modify the entire list of elements and do not modify the individual elements of the list.

A lithium secondary battery according to exemplary embodiments will be described in detail with reference to the accompanying drawings.

A lithium secondary battery according to an embodiment includes a positive electrode, a negative electrode, and an electrolyte interposed between the positive electrode and the negative electrode, wherein a passivation layer is formed on at least one portion of a surface of the negative electrode after one or more cycles of charging and discharging of the lithium secondary battery and the passivation layer includes a particulate passivation layer and a film-like passivation layer.

The lithium secondary battery according to the embodiment may have excellent lifespan characteristics and high capacity by suppressing thickness changes in cells.

According to the invention, a thickness of the film-like passivation layer may be 10 nm or greater. According to an exemplary embodiment, the thickness of the film-like passivation layer may be 15 nm or greater, for example, 20 nm or greater, without embodiments being limited thereto. For example, the thickness of the film-like passivation layer may be from about 10 nm to about 300 nm, for example from about 15 nm to about 150 nm, or from about 20 nm to about 80 nm, without embodiments being limited thereto.

According to the invention, thickness D₁ of the film-like passivation layer may be 10 nm or greater, for example, 15 nm or greater, or 20 nm or greater after one cycle of charging and discharging of the lithium secondary battery, without embodiments being limited thereto. For example, the thickness D₁ of the film-like passivation layer may be from about 10 nm to about 300 nm, for example from about 15 nm to about 150 nm, or from about 20 nm to about 80 nm after one cycle of charging and discharging of the lithium secondary battery, without embodiments being limited thereto.

According to an exemplary embodiment, a ratio D₃₀₀/D₁ of a thickness D₃₀₀ of the film-like passivation layer after 300 cycles of charging and discharging of the lithium secondary battery to a thickness D₁ of the film-like passivation layer after one cycle of charging and discharging of the lithium secondary battery is from about 1.0 to 1.5, for example from about 1.0 to about 1.15, or from about 1.01 to about 1.1. That is, the lithium secondary battery may have long lifespan and high capacity due to small thickness changes in the passivation layer.

According to the invention, the thickness of the particulate passivation layer may be from about 100 to about 600 nm, for example from about 100 to about 400 nm.

According to another exemplary embodiment, the particulate passivation layer has a three-dimensional structure or a shape in which a plurality of spherical particles aggregate.

According to an exemplary embodiment, the particulate passivation layer may include spherical particles having an average diameter of about 50 nm to about 500 nm, for example, about 100 nm to about 200 nm. When the average diameter of the particles of the particulate passivation layer satisfies the ranges described above, the lithium secondary battery may have excellent lifespan and capacity characteristics since a resistance increase in the battery is inhibited in comparison with a lithium secondary battery including a particulate passivation layer densely formed of smaller particles with a smaller average diameter and the lithium secondary battery may also have a less thickness increase in initial cells in comparison with a lithium secondary battery including a particulate passivation layer formed of larger particles with a larger average diameter. The average diameter may be determined by measuring the diameters of spherical particles on scanning electronic microscope (SEM) images.

According to an exemplary embodiment, a ratio of the thickness of the particulate passivation layer to the thickness of the film-like passivation layer may be from about 20:1 to about 3:1, for example from about 15:1 to about 5:1. When the ratio of the thickness of the particulate passivation layer to the thickness of the film-like passivation layer of the lithium secondary battery satisfies the ranges described above, the particulate passivation layer is sufficiently grown, and thus oxidation and reduction reactions between the active material and the electrolyte may be efficiently inhibited.

The above-described thicknesses of the passivation layer are values relatively estimated from sputtering results of Auger Electron Spectroscopy (AES) under discharging conditions of the lithium secondary battery.

According to an exemplary embodiment, the passivation layer may include an organic compound, an inorganic compound, or any combination thereof. For example, the passivation layer may include but embodiments are not limited to: a hydrocarbon compound; an inorganic compound such as LiF and LiPF₆ and a reduced form thereof; or an organic compound comprising C-O, C=O, or any combination thereof.

According to an exemplary embodiment, the particulate passivation layer may include an inorganic compound. For example, the particulate passivation layer may include an inorganic compound including a fluorine atom, without embodiments being limited thereto.

According to an exemplary embodiment, the particulate passivation layer may include an inorganic compound such as LiF and LiPF₆ and a reduced form thereof, without embodiments being limited thereto.

According to an exemplary embodiment, the film-like passivation layer may be formed of an organic compound.

According to an exemplary embodiment, the passivation layer may be formed on at least 40 % by area, at least 55 % by area, for example at least 65 % by area, or at least 80 % by area of the surface of the negative electrode.

According to another exemplary embodiment, the film-like passivation layer may be formed on at least 35 % by area, for example at least 50 % by area, or at least 65 % by area of the surface of the negative electrode.

When the area of the passivation layer satisfies the ranges described above, oxidation and reduction reactions of the electrolyte do not proceed further and resistance of the passivation layer is maintained under a given level, and thus the lithium secondary battery may have excellent lifespan and capacity characteristics.

According to an exemplary embodiment, a C-rate at which the one cycle of charging and discharging of the lithium secondary battery is performed is from about 0.001 C to about 0.4 C, for example from about 0.01 C to about 0.2 C.

According to another exemplary embodiment, a temperature at which the one cycle of charging and discharging of the lithium secondary battery is performed is from about 25 °C to about 80 °C.

In addition, a voltage at which the one cycle of charging and discharging of the lithium secondary battery is performed is from about 2.7 V to about 4.4 V, for example from about 3.0 V to about 4.3 V, without embodiments being limited thereto.

When the above-described conditions for one cycle of charging and discharging of the lithium secondary battery are satisfied, the film-like passivation layer and the particulate passivation layer described above are formed, and thus sufficient battery capacity and long lifespan may be obtained. According to an exemplary embodiment, since the film-like passivation layer and the particulate passivation layer described above are formed at a low C-rate of about 0.01 C and a high temperature of about 60 °C among the initial charging and discharging conditions of the lithium secondary battery, high battery capacity and long lifespan may be obtained.

The negative electrode according to an exemplary embodiment includes a negative current collector, and a negative active material layer formed on the negative current collector, wherein the passivation layer is formed on the negative active material layer. Materials used to form the negative current collector and the negative active material layer may be any materials selected with reference to manufacturing methods of lithium secondary batteries commonly used in the art and materials commonly used to form lithium secondary batteries which will be described later without limitation. For example, the negative current collector may include copper (Cu).

According to an exemplary embodiment, the negative active material layer may include a carbonaceous negative active material. For example, the negative active material layer may include graphite.

According to an exemplary embodiment, the electrolyte may include a lithium salt, a non-aqueous organic solvent, and an additive.

According to an exemplary embodiment, the additive may include vinylene carbonate (VC), vinyl ethylene carbonate (VEC), fluoroethylene carbonate, and the like, without embodiments being limited thereto.

Hereinafter, a general method of manufacturing a lithium secondary battery according to an embodiment and materials used to manufacture the lithium secondary battery will be exemplarily described. However, examples of the manufacturing method and materials used to form the lithium secondary battery are not limited thereto and any known methods and materials may also be applied thereto.

For example, the lithium secondary battery may be manufactured according to the following method.

First, a positive electrode is prepared.

For example, a positive active material composition in which a positive active material, a conductive material, a binder, and a solvent are mixed is prepared. The positive active material composition is directly coated on a metal current collector to manufacture a positive electrode plate. Alternatively, the positive active material composition is cast on a separate support and a film separated from the support is laminated on a metal current collector to manufacture a positive electrode plate. However, the positive electrode of embodiments is not limited to the examples described above and may have various shapes.

The positive active material may include a lithium-containing metal oxide and may further include any material commonly used in the art without limitation. For example, a composite oxide of lithium and a metal selected from cobalt (Co), manganese (Mn), nickel (Ni), and any combination thereof may be used. For example, a compound represented by any one of the following formulae LiₐA,-_{b}B^{l}_{b}D^{l}₂ (where 0.90≤a≤1.8 and 0≤b≤0.5); LiₐE_{1-b}B¹_{b}O_{2-c}D¹_{c} (where 0.90≤a≤1.8, 0≤b≤0.5, and 0≤c≤0.05); LiE_{2-b}B¹_{b}O_{4-c}D¹_{c} (where 0≤b≤0.5 and 0≤c≤0.05); LiₐNi_{1-b-c}Co_{b}B_{c}D¹_{α} (where 0.90≤a≤1.8, 0≤b≤0.5, 0≤c≤0.05, and 0<a≤2); LiₐNi_{1-b-c}Co_{b}B¹_{c}O_{2-α}F¹_{α} (where 0.90≤a≤1.8, 0≤b≤0.5, 0≤c≤0.05, and 0<a<2); LiₐNi_{1-b-c}Co_{b}B¹_{c}O_{2-α}F¹₂ (where 0.90≤a≤1.8, 0≤b≤0.5, 0≤c≤0.05, and 0<a<2); LiₐNi_{1-b-c}Mn_{b}B¹_{c}D¹_{α} (where 0.90≤a≤1.8, 0≤b≤0.5, 0≤c≤0.05, and 0<a≤2); LiₐNi_{1-b-c}Mn_{b}B¹_{c}O_{2-α}F¹_{α} (where 0.90≤a≤1.8, 0≤b≤0.5, 0≤c≤0.05, and 0<a<2); LiₐNi_{1-b-c}Mn_{b}B¹_{c}O_{2-α}F¹₂ (where 0.90≤a≤1.8, 0≤b ≤0.5, 0≤c≤0.05, and 0<a<2); LiₐNi_{b}E_{c}G_{d}O₂ (where 0.90≤a≤1.8, 0≤b≤0.9, 0≤c≤0.5, and 0.001≤d≤0.1); LiₐNi_{b}Co_{c}Mn_{d}GeO₂ (where 0.90≤a≤1.8, 0≤b≤0.9, 0≤c≤0.5, 0≤d≤0.5, and 0.001≤e≤0.1); LiₐNiG_{b}O₂ (where 0.90≤a≤1.8 and 0.001≤b≤0.1); LiₐCoG_{b}O₂ (where 0.90≤a≤1.8 and 0.001≤b≤0.1); LiₐMnG_{b}O₂ (where 0.90≤a≤1.8 and 0.001≤b≤0.1); LiₐMn₂G_{b}O₄ (where 0.90≤a≤1.8 and 0.001≤b≤0.1); QO₂; QS₂; LiQS₂; V₂O₅; LiV₂O₅; LiI¹O₂; LiNiVO₄; Li_{(3-f)}J₂(PO₄)₃ (0≤f≤2); Li_{(3-f)}Fe₂(PO₄)₃ (0≤f≤2); and LiFePO₄ may be used.

In the formulae, A is Ni, Co, Mn, or any combination thereof; B is Al, Ni, Co, Mn, Cr, Fe, Mg, Sr, V, a rare earth element, or any combination thereof; D is O, F, S, P, or any combination thereof; E is Co, Mn, or any combination thereof; F is F, S, P, or any combination thereof; G is Al, Cr, Mn, Fe, Mg, La, Ce, Sr, V, or any combination thereof; Q is Ti, Mo, Mn, or any combination thereof; I is Cr, V, Fe, Sc, Y, or any combination thereof; and J is V, Cr, Mn, Co, Ni, Cu, or any combination thereof.

For example, LiCoO₂, LiMnₓO₂ₓ (x=1, 2), LiNi₁₋ₓMnₓO₂ₓ (0<x<1), LiNi_{1-x-y}CoₓMn_{y}O₂ (0≤x≤0.5 and 0≤y≤0.5), LiFePO₄, and the like may be used.

The compounds listed above may have a coating layer on the surface thereof or a mixture of a compound with no coating layer and a compound having a coating layer may also be used. The coating layer may include a compound of a coating element, such as an oxide, hydroxide, oxyhydroxide, oxycarbonate, or hydroxycarbonate of the coating element. The compound constituting the coating layer may be amorphous or crystalline. Examples of the coating element contained in the coating layer may be Mg, Al, Co, K, Na, Ca, Si, Ti, V, Sn, Ge, Ga, B, As, Zr, or a mixture thereof. The coating layer may be formed on the compound by using the coating element by any coating method, which does not adversely affect physical properties of the positive active material (e.g., spray coating and immersing). These methods are obvious to those of ordinary skill in the art, and thus detailed descriptions thereof will not be given.

The conductive material may be, but not limited to, carbon black, graphite particulates, or the like and any material commonly used in the art as a conductive material may also be used.

The binder may be a vinylidene fluoride/hexafluoropropylene copolymer, polyvinylidene fluoride (PVdF), polyacrylonitrile, polymethylmethacrylate, polytetrafluoroethylene and any mixture thereof, a styrene butadiene rubber polymer, or the like. However, the binder is not limited thereto in embodiments and any material commonly used in the art as a binder may also be used.

The solvent may be N-methyl pyrrolidone, acetone, water, or the like. However, the solvent is not limited thereto in embodiments and any material commonly used in the art as a solvent may also be used.

The positive active material, the conductive material, the binder, and the solvent may be used in amounts commonly used in lithium batteries. At least one of the conductive material, the binder, and the solvent may not be used according to use and configuration of the lithium secondary battery.

Next, a negative electrode is prepared.

For example, a negative active material, a conductive material, a binder, and a solvent are mixed to prepare a negative active material composition. The negative active material composition is directly coated on a metal current collector and dried to manufacture a negative electrode plate. Alternatively, the negative active material composition is cast on a separate support and a film separated from the support is laminated on a metal current collector to manufacture a negative electrode plate.

The negative active material may be any material commonly used as a negative active material in lithium secondary batteries. For example, the negative active material may include at least one selected from lithium metal, a metal that is alloyable with lithium, a transition metal oxide, a non-transition metal oxide, and a carbonaceous material.

For example, the metal alloyable with lithium may be Si, Sn, Al, Ge, Pb, Bi, Sb, an Si-Y alloy (where Y is alkali metal, alkali earth metal, Group XIII element, Group XIV element, transition metal, rare earth element, or a combination thereof (except for Si)), an Sn-Y alloy (where Y is alkali metal, alkali earth metal, Group XIII element, Group XIV element, transition metal, rare earth element, or a combination thereof (except for Sn)), or the like. The element Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, or Te.

For example, the transition metal oxide may be lithium titanium oxide, vanadium oxide, lithium vanadium oxide, or the like.

For example, the non-transition metal oxide may be SnO₂, SiOₓ (0<x<2), or the like.

The carbonaceous material may be crystalline carbon, amorphous carbon, or any mixture thereof. The crystalline carbon may be natural graphite or artificial graphite in amorphous, plate, flake, spherical or fibrous form. The amorphous carbon may be soft carbon (carbon sintered at low temperatures), hard carbon, meso-phase pitch carbides, sintered coke, or the like.

The conductive material, the binder, and the solvent used in the negative active material composition may be the same as those used in the positive active material composition.

The amounts of the negative active material, the conductive material, the binder, and the solvent are amounts commonly used in the art in the manufacture of lithium batteries. At least one of the conductive material, the binder, and the solvent may not be used according to use and configuration of the lithium secondary battery.

Next, a separator to be interposed between the positive electrode and the negative electrode is prepared.

The separator may be any separator commonly used in lithium batteries. A separator that has low resistance to migration of ions of an electrolyte and excellent electrolytic solution-retaining ability may be used. For example, the separator may be glass fiber, polyester, Teflon, polyethylene, polypropylene, polytetrafluoroethylene (PTFE), or a combination thereof, each of which may be a nonwoven fabric or a woven fabric. For example, a windable separator such as polyethylene or polypropylene may be used in lithium-ion batteries. A separator with an excellent organic electrolyte retaining capability may be used in lithium-ion polymer batteries. For example, the separator may be prepared according to the following method.

A polymer resin, a filler, and a solvent are mixed to prepare a separator composition. The separator composition may be directly coated on the electrode and dried to form a separator. Alternatively, the separator composition may be cast on a support and dried and a separator film separated from the support may be laminated on the electrode to form a separator.

The polymer resin used to manufacture the separator is not particularly limited and may be any material commonly used as a binder for electrode plates. For example, the polymer resin may be a vinylidenefluoride/hexafluoropropylene copolymer, polyvinylidene fluoride (PVdF), polyacrylonitrile, polymethylmethacrylate and any mixture thereof.

Next, an electrolyte is prepared.

For example, the electrolyte may be an organic electrolytic solution. Also, the electrolyte may be a solid. For example, the electrolyte may be boron oxide or lithium oxynitride. However, the electrolyte is not limited thereto in embodiments and any material commonly used in the art as a solid electrolyte may also be used. The solid electrolyte may be formed on the negative electrode by sputtering, or the like.

For example, the organic electrolytic solution may be prepared by dissolving a lithium salt in an organic solvent.

The organic solvent may be any organic solvent commonly used in the art. For example, the organic solvent may be propylene carbonate, ethylene carbonate, fluoroethylene carbonate, butylene carbonate, dimethyl carbonate, diethyl carbonate, methylethyl carbonate, methylpropyl carbonate, ethylpropyl carbonate, methylisopropyl carbonate, dipropyl carbonate, dibutyl carbonate, benzonitrile, acetonitrile, tetrahydrofuran, 2-methyltetrahydrofuran, γ-butyrotactone, dioxolane, 4-methyldioxolane, N,N-dimethyl formamide, dimethyl acetamide, dimethylsulfoxide, dioxane, 1,2-dimethoxyethane, sulfolane, dichloroethane, chlorobenzene, nitrobenzene, diethylene glycol, dimethyl ether, or any mixture thereof.

The lithium salt may be any lithium salt commonly used in the art. For example, the lithium salt may be LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (where x and y are natural number), LiCI, Lil, or any mixture thereof.

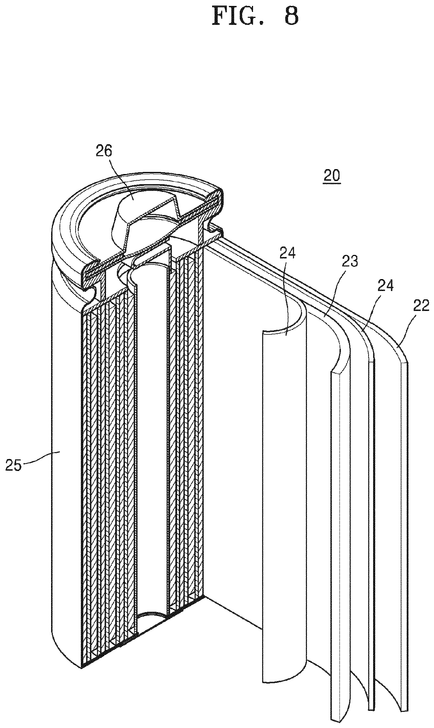

As illustrated in FIG. 8, a lithium secondary battery 20 includes a positive electrode 23, a negative electrode 22, and a separator 24. The positive electrode 23, the negative electrode 22, and the separator 24 are wound up or folded and accommodated in a battery case 25. Next, an organic electrolytic solution is injected into the battery case 25 and the battery case 25 is sealed with a cap assembly 26 to complete the manufacture of the lithium secondary battery 20.

The battery case 25 may be a cylindrical type, a rectangular type, a thin-film type, or the like. For example, the lithium secondary battery 20 may be a thin-film type battery.

The lithium secondary battery 20 may be a lithium ion battery.

A battery assembly may be prepared by interposing the separator between the positive electrode and the negative electrode. When the battery assembly is stacked in a bi-cell structure and impregnated with the organic electrolytic solution, and then the resultant is accommodated in a pouch and sealed, a lithium ion polymer battery is manufactured.

Also, a battery pack may be manufactured by stacking a plurality of battery assemblies and may be used in various devices that require high capacity and high output, such as in laptop computers, smartphones, and electric vehicles.

In addition, the lithium secondary battery may be suitable for electric vehicles (EVs) due to excellent lifespan characteristics and rate-characteristics. For example, the lithium secondary battery may be applied to hybrid electric vehicles such as plug-in hybrid electric vehicles (PHEVs). The lithium secondary battery may also be used in the any device that stores a large amount of power, such as electric bicycles and electric tools.

One or more embodiments will be described in more detail with reference to the following examples and comparative examples. However, these examples and comparative examples are not intended to limit the scope of the appended claims.

### Example 1: Preparation of Lithium Secondary Battery According to an Embodiment

A positive active material slurry was prepared by mixing LiCoO₂ as a positive active material, polyvinylidene fluoride (PVdF) as a binder, and carbon black as a conductive material in N-methyl pyrrolidone as a solvent in a weight ratio of 97.7:1.0: 1.3. The positive active material slurry was coated on an AI current collector, dried, and rolled to prepare a positive electrode.

A negative active material slurry was prepared by mixing graphite as a negative active material and a styrene butadiene rubber (SBR) as a binder in a weight ratio of 97.7:2.3 and water dispersing the mixture. The negative active material slurry was coated on a Cu current collector, dried, and rolled to prepare a negative electrode.

An electrolytic solution was prepared by dissolving LiPF₆ as a lithium salt in a mixed solvent of ethylene carbonate, ethylmethyl carbonate, and dimethyl carbonate mixed in a volume ratio of 30:40:20 to a concentration of 1.15 M.

A lithium secondary battery was prepared according to a well-known process by using the positive electrode, the negative electrode, the electrolytic solution, and polyethylene (PE) coated with polyvinylidene fluoride (PVdF) as a separator.

The lithium secondary battery was charged/discharged at 45 °C with constant current (CC)-constant voltage (CV) of 0.05 C and 3.4 V to a cut-off current of 0.035 C and discharged with a CC of 0.2 C to a cut-off voltage of 3.9 V for precharging.

### Comparative Example 1: Preparation of Conventional Lithium Secondary Battery

The lithium secondary battery prepared according to Example 1 was charged/discharged at 23 °C with a CC of 0.5 C to a cut-off voltage of 3.9 V for precharging.

### Evaluation Example 1: Observation of Shape of Passivation Layer

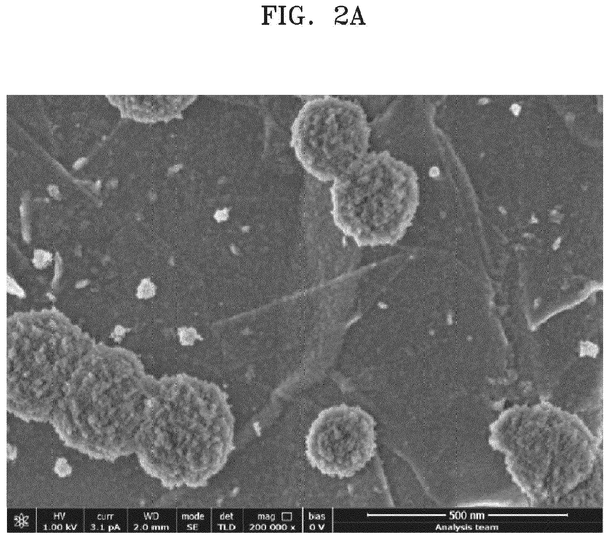

The surface of the negative electrode of the lithium secondary battery prepared according to Example 1 was observed using a scanning electron microscope (SEM) and results are shown in FIGS. 2A to 2D.

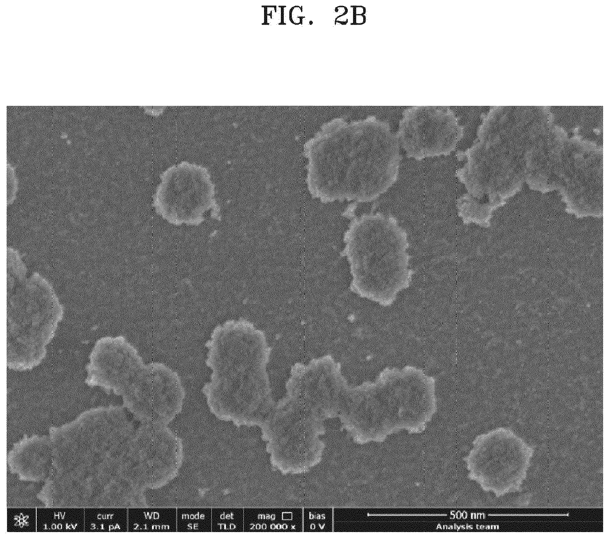

Referring to FIGS. 2A and 2B, it was confirmed that both a particulate passivation layer formed of particles having a diameter of about 100 to about 200 nm and a film-like passivation layer clearly distinguished therefrom are formed on the surface of the negative electrode of the lithium secondary battery according to an embodiment.

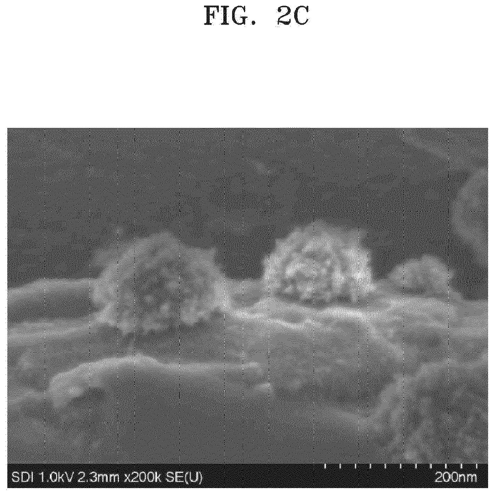

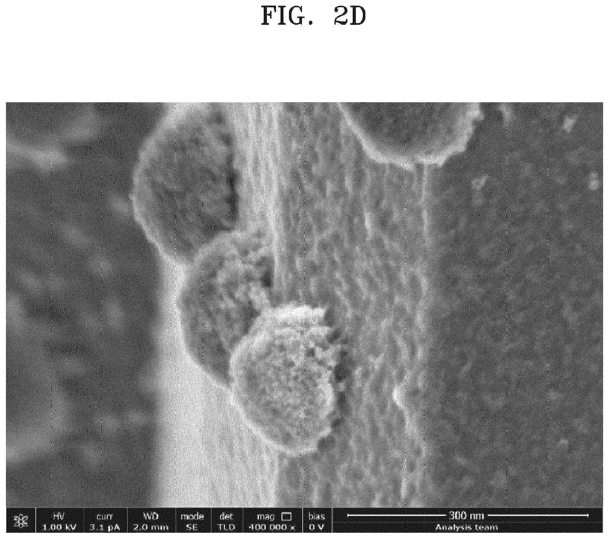

Also, referring to FIGS. 2C and 2D, it was confirmed that the particulate passivation layer is formed of three-dimensional, spherical particles on the surface of the negative electrode and the other portion of the surface of the negative electrode is covered with the film-like passivation layer as a result of observation of the surface of the negative electrode of the lithium secondary battery according to an embodiment from the side.

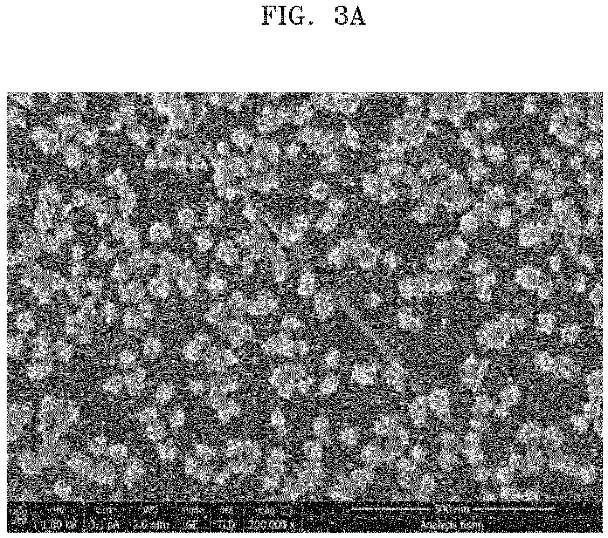

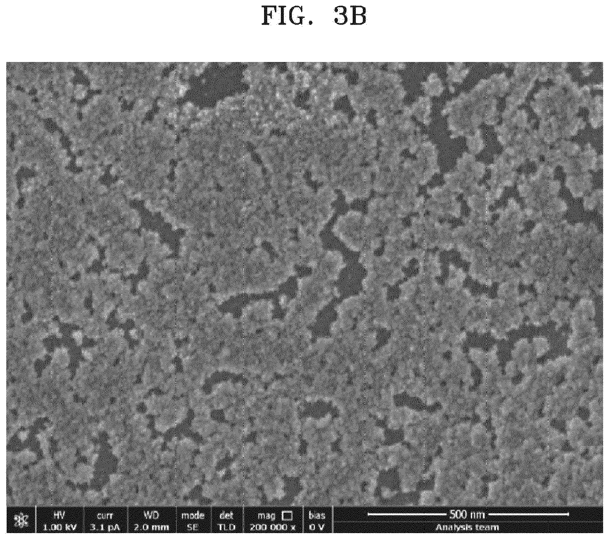

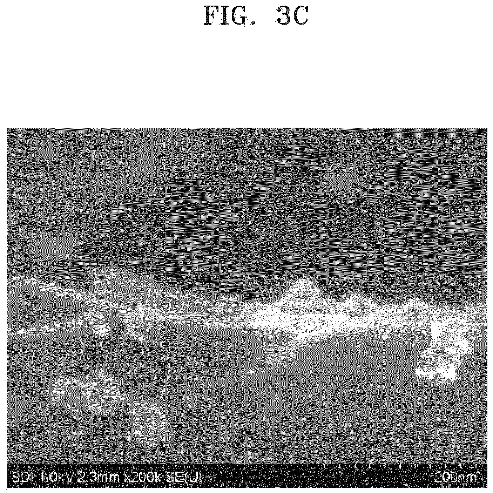

On the contrary, referring to FIGS. 3A to 3C, it was confirmed that the conventional lithium secondary battery includes a particulate passivation layer formed of particles having a diameter of about 25 to about 30 nm in an aggregated form rather than exact spherical shapes and a continuous film-like passivation layer is not distinguished from the aggregated form.

### Evaluation Example 2: Measurement of Thickness of Film-like Passivation Layer

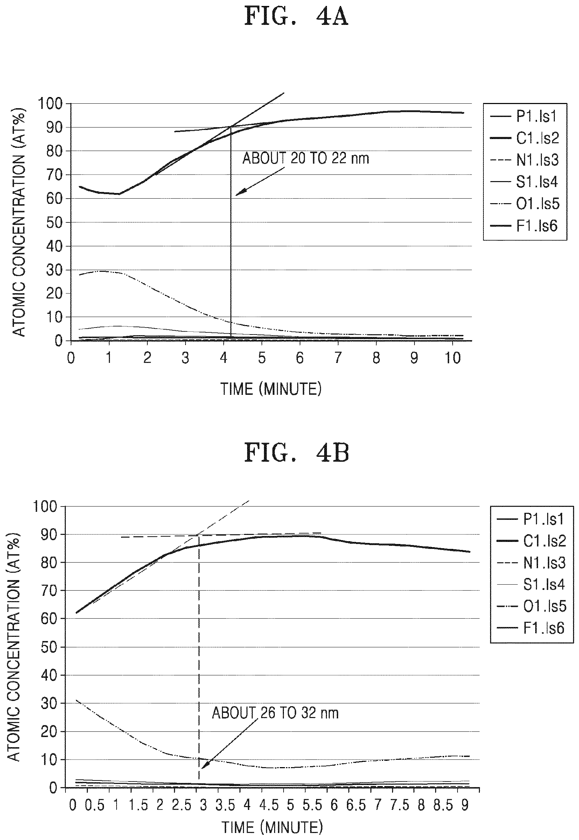

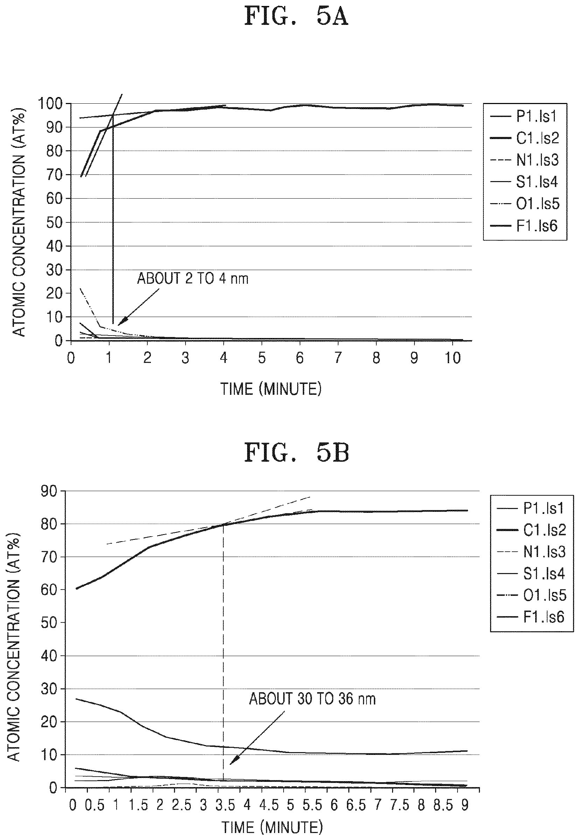

Surface compositions and thicknesses of the film-like passivation layer of the lithium secondary battery prepared according to Example 1 were analyzed by field emission Auger electron spectroscopy (FE-AES) after one cycle of charging and discharging and after 300 cycles of charging and discharging and results are shown in Table 1 below and FIGS. 4A and 4B. In addition, surface compositions and thicknesses of the film-like passivation layer of the conventional lithium secondary battery prepared according to Comparative Example 1 were analyzed by FE-AES after one cycle of charging and discharging and after 300 cycles of charging and discharging and results are shown in Table 12 below and FIGS. 5A and 5B. The unit "at%" refers to an atomic percent which is a unit of atomic concentration.

Particularly, the FE-AES was performed in the following manner.
(1) Discharge and disassemble a cell to be analyzed in a moisture-reduced atmosphere (dry room or glove box).
(2) Wash a negative electrode of the cell in the glove box using dimethyl carbonate (DMC) for 10 minutes or more to remove remaining electrolytic solution.
(3) Collect a portion of the surface of the washed negative electrode substrate as a sample
(4) Mount the sample in an FE-AES device in an air-shielded state and perform sputtering a portion of the film-like passivation layer where no particulate passivation layer is found.
(5) Measure thickness of a portion of the film-like passivation layer where a carbon composition is saturated (about 90 % or more) after sputtering and convert the thickness of the passivation layer based on an SiO₂ etching rate.

In Tables 1 and 2 below, Particle 1 and Particle 2 show values respectively measured in particulate passivation layers of the passivation layer formed on the surface of the negative electrode and Film 1 and Film 2 show values respectively measured in film-like passivation layers of the passivation layer formed on the surface of the negative electrode. For example, in Table 1, "Particle 1" and "Particle 2" refer to the particulate passivation layer after one cycle of charging and discharging, and "Film 1" and "Film 2" refer to the film-like passivation layer after one cycle of charging and discharging, each with respect to Example 1. Additionally, in Table 2, "Particle 1" and "Particle 2" refer to the particulate passivation layer after one cycle of charging and discharging, and "Film 1" and "Film 2" refer to the film-like passivation layer after one cycle of charging and discharging, each with respect to Comparative Example 1.

In FIG. 4A, P1, C1, N1, S1, O1, and F1 refer to the AT% of phosphorus, carbon, nitrogen, sulfur, oxygen, and fluorine, respectively, in the film-like passivation layer of Example 1 after one cycle of charging and discharging. In FIG. 4B, P1, C1, N1, S1, O1, and F1 refer to the AT% of phosphorus, carbon, nitrogen, sulfur, oxygen, and fluorine, respectively, in the film-like passivation layer of Example 1 after 300 cycles of charging and discharging. In FIG. 5A, P1, C1, N1, S1, O1, and F1 refer to the AT% of phosphorus, carbon, nitrogen, sulfur, oxygen, and fluorine, respectively, in the film-like passivation layer of Comparative Example 1 after one cycle of charging and discharging. In FIG. 5B, P1, C1, N1, S1, O1, and F1 refer to the AT% of phosphorus, carbon, nitrogen, sulfur, oxygen, and fluorine, respectively, in the film-like passivation layer of Comparative Example 1 after 300 cycles of charging and discharging.

**Table 1**

| | C (at%) | O (at%) | F (at%) | S (at%) | Total (at%) |
|---|---|---|---|---|---|
| Particle 1 | 65.5 | 24.1 | 5.8 | 4.6 | 100 |
| Particle 2 | 65.0 | 25.9 | 5.0 | 4.1 | 100 |
| Film 1 | 68.7 | 23.3 | 4.4 | 3.6 | 100 |
| Film 2 | 68.8 | 24.6 | 4.4 | 2.2 | 100 |

**Table 2**

| | C (at%) | O (at%) | F (at%) | S (at%) | P (at%) | Total (at%) |
|---|---|---|---|---|---|---|
| Particle 1 | 62.6 | 21.7 | 8.1 | 4.3 | 3.2 | 100 |
| Particle 2 | 63.0 | 21.5 | 7.6 | 4.5 | 3.4 | 100 |
| Film 1 | 67.5 | 23.3 | 6.3 | 3.0 | - | 100 |
| Film 2 | 67.3 | 23.5 | 6.4 | 2.8 | - | 100 |

Referring to the compositions of Table 1 and FIGS. 4A and 4B, thicknesses of the film-like passivation layer of the lithium secondary battery of Example 1 were from about 20 to about 22 nm after one cycle of charging and discharging and from about 26 to about 32 nm after 300 cycles of charging and discharging. Thus, it was confirmed that the thickness of the film-like passivation layer was not considerably changed although the number of cycles increased.

On the contrary, referring to the compositions of Table 2 and FIGS. 5A and 5B, thicknesses of the passivation layer of the lithium secondary battery of Comparative Example 1 were from about 2 nm to about 4 nm after one cycle of charging and discharging indicating that the passivation layer was hardly formed and from about 30 nm to about 36 nm after 300 cycles of charging and discharging indicating that the thickness of the passivation layer was considerably changed.

### Evaluation Example 3: Measurement of Thickness Increase Rate of Cell with Respect to Number of Cycles

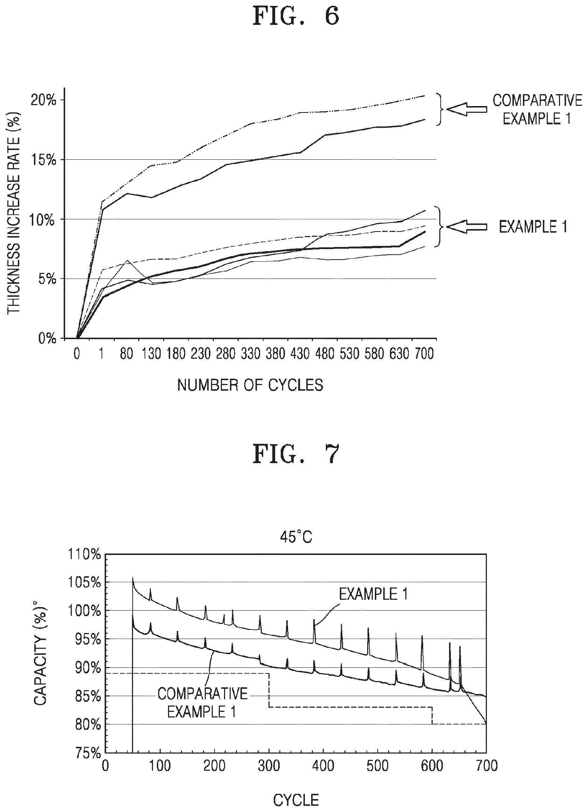

Thickness increase rates of the lithium secondary batteries prepared according to Example 1 and Comparative Example 1 with respect to the number of cycles of charging and discharging were measured and results thereof are shown in FIG. 6. The thickness increase rate is defined as a percentage of a thickness of a battery after charging and discharging (Tₓ) to an initial thickness of the battery (T₁), i.e., [{(Tₓ-T₁)/T₁}×100%].

Referring to FIG. 6, it was confirmed that while an initial thickness increase rate of the lithium secondary battery of Comparative Example 1 was 10 % or more and the thickness increase rate steadily increased to 15 % or more as the number of cycles of charging and discharging increased, an initial thickness increase rate of the lithium secondary battery of Example 1 was about 5 % and the thickness increase rate was maintained at 10 % or less even after about 500 cycles of charging and discharging.

### Evaluation Example 4: Evaluation of Lifespan Characteristics of Lithium Secondary Battery

Capacity characteristics of lithium secondary batteries of Example 1 and Comparative Example 1 with respect to the number of cycles of charging and discharging were evaluated and results thereof are shown in FIG. 7.

The capacity characteristics of the batteries were evaluated using a charger/discharger. The batteries were charged at 25 °C with CC-CV of 0.5 C and 4.3 V to a cut-off current of 0.05 C and discharged with a CC of 0.7 C to a cut-off voltage of 3.0 V. Capacities of the batteries were identified at every 50 cycles at a rate of 0.2 C at a cut-off voltage of 3.0 V.

Referring to FIG. 7, it was confirmed that the lithium secondary battery of Example 1 had better capacity characteristics with 90 % of the capacity maintained until about 600 cycles of charging and discharging and excellent lifespan characteristics in comparison with the lithium secondary battery of Comparative Example 1.

Embodiments of the invention can provide a lithium secondary battery comprising: a positive electrode; a negative electrode; and an electrolyte interposed between the positive electrode and the negative electrode, wherein a passivation layer is formed on at least one portion of a surface of the negative electrode after one cycle of charging and discharging of the lithium secondary battery, and the passivation layer comprises a particulate passivation layer and a film-like passivation layer.

A C-rate at which the one cycle of charging and discharging of the lithium secondary battery is performed may be from about 0.001 C to about 0.4 C.

A temperature at which the one cycle of charging and discharging of the lithium secondary battery is performed may be from about 25 °C to about 80 °C.

Embodiments of the invention can provide a method of manufacturing a lithium secondary comprising: providing a positive electrode; providing a negative electrode; providing an electrolyte interposed between the positive electrode and the negative electrode; and forming a passivation layer on at least one portion of a surface of the negative electrode after one cycle of charging and discharging of the lithium secondary battery, wherein the passivation layer comprises a particulate passivation layer and a film-like passivation layer.

A C-rate at which the one cycle of charging and discharging of the lithium secondary battery is performed may be from about 0.001 C to about 0.4 C.

A temperature at which the one cycle of charging and discharging of the lithium secondary battery is performed may be from about 25 °C to about 80 °C.

It should be understood that embodiments described herein should be considered in a descriptive sense only and not for purposes of limitation. Descriptions of features or aspects within each embodiment should typically be considered as available for other similar features or aspects in other embodiments.

While one or more embodiments have been described with reference to the figures, it will be understood by those of ordinary skill in the art that various changes in form and details may be made therein without departing from the scope as defined by the following claims.

## Claims

1. A lithium secondary battery comprising:
a positive electrode;
a negative electrode; and
an electrolyte interposed between the positive electrode and the negative electrode,
wherein a passivation layer is formed on at least one portion of a surface of the negative electrode after initial cycle of charging and discharging of the lithium secondary battery,
wherein the passivation layer comprises a particulate passivation layer and a film-like passivation layer,
wherein a thickness of the film-like passivation layer is 10 nm or greater,
wherein a thickness of the particulate passivation layer is from about 100 nm to about 600 nm.

2. The lithium secondary battery of claim 1, wherein the particulate passivation layer comprises spherical particles having an average diameter of about 50 nm to about 500 nm.

3. The lithium secondary battery of claim 1 or 2, wherein a ratio of a thickness of the particulate passivation layer to a thickness of the film-like passivation layer is from about 20:1 to about 3:1.

4. The lithium secondary battery of any one of claims 1 to 3, wherein the particulate passivation layer comprises an inorganic compound.

5. The lithium secondary battery of any one of claims 1 to 4, wherein the passivation layer is formed on at least 40 % by area of the surface of the negative electrode; and/or
wherein the film-like passivation layer is formed on at least 35 % by area of the surface of the negative electrode.

6. The lithium secondary battery of any one of claims 1 to 5, wherein a C-rate at which the initial cycle of charging and discharging of the lithium secondary battery is performed is from about 0.001 C to about 0.4 C.

7. The lithium secondary battery of any one of claims 1 to 6, wherein a temperature at which the initial cycle of charging and discharging of the lithium secondary battery is performed is from about 25 °C to about 80 °C.

8. The lithium secondary battery of any one of claims 1 to 6, wherein the negative electrode comprises: a negative current collector; and a negative active material layer formed on the negative current collector, wherein the passivation layer is formed on the negative active material layer;
optionally wherein the negative active material layer comprises a carbonaceous negative active material.

9. The lithium secondary battery of any one of claims 1 to 8, wherein the electrolyte comprises a lithium salt, a non-aqueous organic solvent, and an additive;
optionally wherein the additive comprises vinylene carbonate, vinyl ethylene carbonate, or fluoroethylene carbonate.

10. A method of manufacturing a lithium secondary battery according to claim 1, comprising:
forming a lithium secondary battery by providing a positive electrode, providing a negative electrode, and providing an electrolyte interposed between the positive electrode and the negative electrode; and
forming a passivation layer on at least one portion of a surface of the negative electrode after one cycle of charging and discharging of the lithium secondary battery, wherein the passivation layer comprises a particulate passivation layer and a film-like passivation layer;
wherein a C-rate at which the one cycle of charging and discharging of the lithium secondary battery is performed is from about 0.001 C to about 0.4 C, and
wherein a temperature at which the one cycle of charging and discharging of the lithium secondary battery is performed is from about 25 °C to about 80 °C.

## Patentansprüche

1. Lithiumsekundärbatterie, umfassend:
eine positive Elektrode;
eine negative Elektrode; und
einen Elektrolyten, der zwischen der positiven Elektrode und der negativen Elektrode angeordnet ist,
wobei nach einem ersten Lade- und Entladezyklus der Lithiumsekundärbatterie eine Passivierungsschicht auf mindestens einem Abschnitt einer Oberfläche der negativen Elektrode ausgebildet ist,
wobei die Passivierungsschicht eine teilchenförmige Passivierungsschicht und eine filmartige Passivierungsschicht umfasst,
wobei eine Dicke der filmartigen Passivierungsschicht 10 nm oder mehr beträgt,
wobei eine Dicke der teilchenförmigen Passivierungsschicht von etwa 100 nm bis etwa 600 nm beträgt.

2. Lithiumsekundärbatterie nach Anspruch 1, wobei die teilchenförmige Passivierungsschicht kugelförmige Partikel mit einem durchschnittlichen Durchmesser von etwa 50 nm bis etwa 500 nm umfasst.

3. Lithiumsekundärbatterie nach Anspruch 1 oder 2, wobei ein Verhältnis einer Dicke der teilchenförmigen Passivierungsschicht zu einer Dicke der filmartigen Passivierungsschicht von etwa 20:1 bis etwa 3:1 beträgt.

4. Lithiumsekundärbatterie nach einem der Ansprüche 1 bis 3, wobei die teilchenförmige Passivierungsschicht eine anorganische Verbindung umfasst.

5. Lithiumsekundärbatterie nach einem der Ansprüche 1 bis 4, wobei die Passivierungsschicht auf mindestens 40 Flächen-% der Oberfläche der negativen Elektrode ausgebildet ist; und/oder
wobei die filmartige Passivierungsschicht auf mindestens 35 Flächen-% der Oberfläche der negativen Elektrode ausgebildet ist.

6. Lithiumsekundärbatterie nach einem der Ansprüche 1 bis 5, wobei eine C-Rate, bei welcher der erste Lade- und Entladezyklus der Lithiumsekundärbatterie ausgeführt wird, von etwa 0,001 C bis etwa 0,4 C beträgt.

7. Lithiumsekundärbatterie nach einem der Ansprüche 1 bis 6, wobei eine Temperatur, bei welcher der erste Lade- und Entladezyklus der Lithiumsekundärbatterie ausgeführt wird, von etwa 25 °C bis etwa 80°C beträgt.

8. Lithiumsekundärbatterie nach einem der Ansprüche 1 bis 6, wobei die negative Elektrode Folgendes umfasst: einen negativen Stromabnehmer; und eine auf dem negativen Stromabnehmer ausgebildete negative Aktivmaterialschicht, wobei die Passivierungsschicht auf der negativen Aktivmaterialschicht ausgebildet ist;
wobei gegebenenfalls die negative Aktivmaterialschicht ein kohlenstoffhaltiges negatives Aktivmaterial umfasst.

9. Lithiumsekundärbatterie nach einem der Ansprüche 1 bis 8, wobei der Elektrolyt ein Lithiumsalz, ein nichtwässriges organisches Lösungsmittel und einen Zusatzstoff umfasst; wobei gegebenenfalls der Zusatzstoff Vinylencarbonat, Vinylethylencarbonat oder Fluorethylencarbonat umfasst.

10. Verfahren zur Herstellung einer Lithiumsekundärbatterie nach Anspruch 1, umfassend:
Ausbilden einer Lithiumsekundärbatterie durch Bereitstellen einer positiven Elektrode,
Bereitstellen einer negativen Elektrode und Bereitstellen eines zwischen der positiven Elektrode und der negativen Elektrode angeordneten Elektrolyten; und
Ausbilden einer Passivierungsschicht auf mindestens einem Abschnitt einer Oberfläche der negativen Elektrode nach einem Lade- und Entladezyklus der Lithiumsekundärbatterie, wobei die Passivierungsschicht eine teilchenförmige Passivierungsschicht und eine filmartige Passivierungsschicht umfasst;
wobei eine C-Rate, bei welcher der eine Lade- und Entladezyklus der Lithiumsekundärbatterie ausgeführt wird, von etwa 0,001 C bis etwa 0,4 C beträgt, und
wobei eine Temperatur, bei welcher der erste Lade- und Entladezyklus der Lithiumsekundärbatterie ausgeführt wird, von etwa 25 °C bis etwa 80 °C beträgt.

## Revendications

1. Batterie secondaire au lithium comprenant :
une électrode positive ;
une électrode négative ; et
un électrolyte interposé entre l'électrode positive et l'électrode négative,
dans laquelle une couche de passivation est formée sur au moins une partie d'une surface de l'électrode négative après un cycle initial de charge et de décharge de la batterie secondaire au lithium,
dans laquelle la couche de passivation comprend une couche de passivation particulaire et une couche de passivation en forme de film,
dans laquelle une épaisseur de la couche de passivation en forme de film est supérieure ou égale à 10 nm,
dans laquelle une épaisseur de la couche de passivation particulaire est d'environ 100 nm à environ 600 nm.

2. Batterie secondaire au lithium de la revendication 1, dans laquelle la couche de passivation particulaire comprend des particules sphériques ayant un diamètre moyen allant d'environ 50 nm à environ 500 nm.

3. Batterie secondaire au lithium de la revendication 1 ou 2, dans laquelle un rapport d'une épaisseur de la couche de passivation particulaire sur une épaisseur de la couche de passivation en forme de film est d'environ 20:1 à environ 3:1.

4. Batterie secondaire au lithium de l'une quelconque des revendications 1 à 3, dans laquelle la couche de passivation particulaire comprend un composé inorganique.

5. Batterie secondaire au lithium de l'une quelconque des revendications 1 à 4, dans laquelle la couche de passivation est formée sur au moins 40 % en superficie de la surface de l'électrode négative ; et/ou
dans laquelle la couche de passivation en forme de film est formée sur au moins 35 % en superficie de la surface de l'électrode négative.

6. Batterie secondaire au lithium de l'une quelconque des revendications 1 à 5, dans laquelle un taux C auquel le cycle initial de charge et de décharge de la batterie secondaire au lithium est effectué est d'environ 0,001 C à environ 0,4 C.

7. Batterie secondaire au lithium de l'une quelconque des revendications 1 à 6, dans laquelle une température à laquelle le cycle initial de charge et de décharge de la batterie secondaire au lithium est effectué est d'environ 25°C à environ 80°C.

8. Batterie secondaire au lithium de l'une quelconque des revendications 1 à 6, dans laquelle l'électrode négative comprend : un collecteur de courant négatif ; et une couche de matériau actif négatif formée sur le collecteur de courant négatif, où la couche de passivation est formée sur la couche de matériau actif négatif ;
facultativement dans laquelle la couche de matériau actif négatif comprend un matériau actif négatif carboné.

9. Batterie secondaire au lithium de l'une quelconque des revendications 1 à 8, dans laquelle l'électrolyte comprend un sel de lithium, un solvant organique non aqueux, et un additif ;
facultativement dans laquelle l'additif comprend du carbonate de vinylène, du carbonate de vinyléthylène ou du carbonate de fluoroéthylène.

10. Procédé de fabrication d'une batterie secondaire au lithium selon la revendication 1, comprenant les étapes consistant à :
former une batterie secondaire au lithium en fournissant une électrode positive, en fournissant une électrode négative, et en fournissant un électrolyte interposé entre l'électrode positive et l'électrode négative ; et
former une couche de passivation sur au moins une partie d'une surface de l'électrode négative après un cycle de charge et de décharge de la batterie secondaire au lithium, où la couche de passivation comprend une couche de passivation particulaire et une couche de passivation en forme de film ;
dans lequel un taux C auquel le cycle de charge et de décharge de la batterie secondaire au lithium est effectué est d'environ 0,001 C à environ 0,4 C, et
dans lequel une température à laquelle le cycle de charge et de décharge de la batterie secondaire au lithium est effectué est d'environ 25°C à environ 80°C.
